# EUROPÄISCHE PATENTSCHRIFT

(11) **EP 3 681 707 B1**
(45) Veröffentlichungstag und Bekanntmachung des Hinweises auf die Patenterteilung: **10.08.2022**
(21) Anmeldenummer: 18731065.1
(22) Anmeldetag: 12.06.2018
(51) Int. Cl.: B32B 5/02, B32B 5/08, B32B 7/12, B32B 25/10, B32B 25/14, B32B 1/08

(54) **MEHRSCHICHTIGER FLEXIBLER SCHLAUCH**
MULTILAYER FLEXIBLE HOSE
TUYAU FLEXIBLE MULTICOUCHE

(30) Priorität: 11.09.2017 DE 102017215964
(43) Veröffentlichungstag der Anmeldung: 22.07.2020
(73) Patentinhaber: ContiTech Schlauch GmbH, 30165 Hannover (DE)
(72) Erfinder: THUM, Michael, 30419 Hannover (DE); SINEMUS, Martin, 30419 Hannover (DE); DÖRING, Lars, 30419 Hannover (DE)
(74) Vertreter: Continental Corporation
(86) Internationale Anmeldenummer: PCT/EP2018/065414
(87) Internationale Veröffentlichungsnummer: WO 2019/048095

(56) Entgegenhaltungen:
- EP-A1- 1 493 956
- EP-A1- 1 745 079
- EP-A1- 2 066 947
- EP-B1- 1 745 079
- EP-B1- 2 066 947
- JP-B2- 4 837 817

## Beschreibung

Die Erfindung betrifft einen mehrschichtigen flexiblen Schlauch, insbesondere einen mehrschichtigen flexiblen Bremsschlauch.

Bremsschläuche werden in Bremsanlagen von Kraftfahrzeugen eingesetzt, um über das Bremspedal eine statische Bremsflüssigkeitssäule zu erzeugen, die den Druck verlustfrei auf die Radbremszylinder weiterleiten soll. Die Weitergabe der aufgewendeten Fußkraft erfolgt in den Bremsschläuchen bzw. Bremsleitungen reibungslos und verlustfrei. Bei der Überbrückung vom Fahrzeugboden zu den Rädern, d.h. den Bremszylindern, sind flexible Übergänge nötig, um einen Ausgleich zwischen Ein- und Ausfedern zu schaffen. Hierzu werden in der Regel flexible Bremsschläuche, die wenigstens eine Schicht auf Basis wenigstens einer Kautschukmischung und wenigstens eine Festigkeitsträgerschicht haben, verbaut. Gegenüber starren Bremsleitungen sind sie dehnbar und verändern diese Eigenschaft mit wechselnden Temperaturbedingungen. Die Volumenänderung in den flexiblen Bremsschläuchen wird über den Pedalweg ausgeglichen, was einen sich ständig verändernden Druckpunkt zur Folge hat.

Für die sich ständig ändernden Temperatur-, Volumen- und Druckwerte ist es erforderlich, dass der Schlauch über die gesamte Lebensdauer einen definierten Mindestwert für die Haftung der einzelnen Schichten besitzt. Nur dann kann eine einwandfreie und sichere Funktionsweise des Bremsschlauches gewährleistet werden. Für diese Haftung der einzelnen Schichten untereinander werden in der Regel spezielle Haftsysteme verwendet.

Als Haftsystem wird in der Regel ein Resorcin-Formaldehyd System eingesetzt, welches in der kautschukverarbeitenden Industrie somit den derzeitigen Stand der Technik bildet. Resorcin-Formaldehyd-Haftsysteme in Elastomermischungen werden häufig auch als RFS (Resorcin Formaldehyd Silica) bezeichnet, wässrige Polymerdispersionen als RFL (Resorcin Formaldehyd Latex).

Insbesondere die Haftung zwischen Resorcin-Formaldehyd-Systemen (RF-Systemen) und EPDM-Elastomer ist bestenfalls als mittelmäßig zu beurteilen. Zwischen EPM-Elastomer und RF-Systemen kommt hingegen gar keine Bindung zustande.

Die Haftsystemkomponenten Resorcin und Formaldehyd sind als umwelt- und gesundheitsschädlich eingestuft. Die Verwendung beider Stoffe wird deshalb in den nächsten Jahren vermutlich stark eingeschränkt und / oder mit hohen Auflagen verbunden sein.

EP 1 493 956 A1 beschreibt einen Hydraulikschlauch, der für dauerhafte dynamische Belastbarkeiten bei Temperaturen von 135°C und mehr geeignet ist. Hierzu befindet sich zwischen einer Textilgeflechtslage und einer Stahldrahtgeflechtslage noch eine Zwischenschicht auf der Basis von hydriertem Nitrilkautschuk, die 2 bis 30 phr zumindest eines Metallsalzes der Methacryl- und/oder der Acrylsäure enthält. Die wesentliche Aufgabescheint hiermit somit die Bindung zwischen einer Textilgeflechtslage und einer Stahldrahtgeflechtslage zu sein, die über eine Zwischenschicht aus hydriertem Nitrilkautschuk hergestellt wird.

EP 2 066 947 A1 beschreibt einen flexiblen Schlauch enthaltend ein Strickstoff ("knit fabric"), wobei der Festigkeitsträger ein Hybridgarn aus p-Aramid- und m-Aramidfasern enthält. Dieser Schlauch zeichnet sich durch verbesserten Berstdruck und/oder bessere Ermüdungsbeständigkeit ("fatigue resistance") aus.

EP 1 745 079 A1 beschreibt ein Verfahren zur Anbindung von Festigkeitsträgern zu Kautschuk. Hierbei wird auf die Festigkeitsträger Polyester, Nylon und Aramid abgezielt.

Die Aufgabe der vorliegenden Erfindung besteht somit darin, einen mehrschichtigen flexiblen Schlauch, insbesondere einen mehrschichtigen flexiblen Bremsschlauch, bereitzustellen, der sich durch eine verbesserte Haftung der einzelnen Schichten, insbesondere der Haftung zwischen einer Festigkeitsträgerschicht und einer Schicht auf Basis wenigstens eines EPM/EPDM-Elastomers auszeichnet und die Anforderungen der gültigen Prüfnormen erfüllt.

Gelöst wird diese Aufgabe durch den mehrschichtigen flexiblen Schlauch gemäß Anspruch 1.

Es hat sich gezeigt, dass durch eine Haftschicht mit wenigstens einem Zink(II)salz der genannten Säuren die Haftung zwischen den Schichten deutlich verbessert wird, und die Anforderungen an die dynamische Leistungsfähigkeit erfüllt werden.

In einer bevorzugten Ausführungsform kann somit auf die Verwendung von RF-Systemen in der Haftschicht teilweise oder vollständig verzichtet werden. Die Menge an RF-Systemen in der Haftschicht beträgt besonders bevorzugt 0 phr.

Die Außenschicht und die Innenschicht können hinsichtlich ihrer quantitativen und / oder qualitativen Zusammensetzung gleich oder verschieden voneinander sein. Sie können jeweils einlagig oder mehrlagig ausgebildet sein.

Zur Erzielung der höchst möglichen Flexibilität sind beide Schichten auf der Basis wenigstens eines EPM oder EPDM-Elastomers und weiterer Mischungsingredienzien aufgebaut.

Die Kautschukkomponenten Ethylen-Propylen-Mischpolymerisat (EPM) und Ethylen-Propylen-Dien-Mischpolymerisat (EPDM) können alleine oder in Kombination verwendet werden.

Die Kautschukkomponenten EPM bzw. EPDM besitzen eine besonders gute Beständigkeit gegenüber der Bremsflüssigkeit.

Die Mischungsingredienzien umfassen wenigstens einen Vernetzer oder ein Vernetzersystem.

Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Fasern, Farbpigmente). Auch hier wird diesbezüglich auf den allgemeinen Stand der Kautschukmischungstechnologie verwiesen.

Die Festigkeitsträgerschicht kann ein- oder mehrlagig ausgebildet sein. Als Materialien für die textile Festigkeitsträgerschicht können Polyvinylalkohol (PVAL) oder einer Hybridvariante aus PVAL und Rayon oder einer Hybridvariante aus PVAL und Aramid oder einer Hybridvariante aus PVAL und Polyamid verwendet werden.

Die Materialien für die Festigkeitsträgerschicht können hierbei alleine oder in Kombination verwendet werden, d.h. es sind auch so genannte Hybridsysteme möglich. Insbesondere für Bremsschläuche werden bevorzugt Materialien mit besonders guter dynamischer Leistungsfähigkeit alleine oder in Kombination eingesetzt, die gleichzeitig eine geringe Volumenzunahme zeigen, wie bspw. PVAL oder Rayon oder PES oder Aramid.

Die textile Festigkeitsträgerschicht kann hierbei noch mit wenigstens einem Haftvermittler ausgestattet, z. Bsp. einem haftvermittelnden Dip, sein. Im Rahmen der vorliegenden Erfindung ist es allerdings bevorzugt, wenn die textile Festigkeitsträgerschicht frei von einer haftvermittelnden Ausstattung, insbesondere frei von RF-Systemen, ist, d.h. die Menge an Haftvermittler, insbesondere RF-Systemen, in der textilen Festigkeitsträgerschicht 0 phr beträgt.

Die Festigkeitsträgerschicht kann ein Gewebe, Gewirk, Geflecht oder Gestrick sein.

Erfindungswesentlich ist es, dass der Schlauch wenigstens eine ein- oder mehrlagige Haftschicht enthält, wobei die Haftschicht als Haftvermittler wenigstens ein Zink(II)salz der Acrylsäure und / oder wenigstens ein Zink(II)salz der Methacrylsäure und / oder wenigstens ein Zink(II)salz der Monomethacrylsäure enthält.

Die Gesamtmenge der genannten Haftvermittler, welche alleine oder in Kombination verwendet werden können, beträgt bevorzugt 10 bis 100 phr, besonders bevorzugt 20 bis 80 phr und ganz besonders bevorzugt 20 bis 50 phr.

Die Zusammensetzung der Haftschicht ist bevorzugt hinsichtlich ihrer qualitativen und / oder quantitativen Bestandteile, insbesondere hinsichtlich der Art und der Menge Kautschuk, Füllstoff und Vernetzungsmittel, mit Außnahme der genannten Haftvermittler und der für eine peroxidische Vernetzung benötigten Coagenzien, gleich. Hierdurch wird die Komplexität während der Herstellung des Schlauches weiter verringert.

Bevorzugt enthält die Haftschicht wenigstens ein Peroxid als Vulkanisationsmittel. Insbesondere durch die Kombination der genannten Haftmittel und des Peroxids realisiert sich ein zusätzliches Acrylat-Polymer-Netzwerk, welches an die textilen Festigkeitsträger anbindet. Dieses Netzwerk verfügt neben den starren kovalenten Bindungen auch über flexible ionische Bindungen und garantiert somit die dynamische Leistungsfähigkeit des Schlauches.

Die Gesamtmenge an Peroxid beträgt bevorzugt 3 bis 7 phr, besonders bevorzugt 3 bis 6 ph, ganz besonders bevorzugt 4 bis 5 phr.

In einer bevorzugten Ausführungsform enthält die Haftschicht noch wenigstens einen Füllstoff. Hierbei kann es sich um alle der fachkundigen Person bekannten Füllstoffe handeln, wie bspw. Ruß, Graphit, Kohlenstoffnanoröhren (CNT), Kieselsäure, Calcium- und Aluminiumsilikate, Kieselgur, Kaolin, Kalkstein, Zeolithe, Cyclodextrine, Feldspat und/oder Talkum Kreide, Tonerde-Gel, Fasern (Kurz- und Langfasern, Glas-, Kohle-, Aramidfasern), Whisker (Aluminiumoxid, Siliziumcarbid), Glimmer, Magnetit, Zinkoxid, Kern/Mantel-Füllstoffe, Asphalt, Hartgummistaub, Chloride, Carbonate, Sulfate, Oxide und Hydroxide von Alkali- und Erdalkalimetallen, Al(OH)₃, PVC, Polymerpulver (z.B. PE oder PTFE-Pulver), Faktis, anorganische und organische Pigmente, organische oder anorganische Säuren, Glaskugeln, Holzmehl, Nussschalenmehl, handeln, die jeweils alleine oder in Kombination verwendet werden können. Überraschenderweise hat sich gezeigt, dass die Verwendung von Kreide zu einer verbesserten Haftung führt und dass hierbei gleichzeitig auf den Einsatz von Lösemitteln teilweise oder ganz verzichtet werden kann.

Die Haftmischung kann während der Herstellung des Schlauches als extrudierte oder coextrudierte Schicht, als Kalanderplatte oder in Form einer Gummilösung aufgebracht werden.

Der Schlauch kann des Weiteren zusätzlich noch wenigstens eine weitere Zwischenschicht, bevorzugt auf der Basis wenigstens eines Kautschuks enthalten.

Der Schlauch kann vorzugsweise ein Bremsschlauch, Kupplungsschlauch, Kühlwasserschlauch, Zapfschlauch, Betankungsschlauch, Chemieschlauch, beheizbarer Schlauch, Trinkwasserschlauch, Lebensmittelschlauch, Krümmerschlauch, Kraftstoffschlauch, Offshore- und Marine-Schlauch, Bunkerschlauch, Klimaschlauch oder Farbspritzschlauch sein.

Die Erfindung soll nun anhand von Vergleichs- und Ausführungsbeispielen, die in den Tabellen la und lb zusammengefasst sind, näher erläutert werden.

Tabelle 1a zeigt hierbei die Ergebnisse des T-Tests anhand einer Konzentrationsreihe mit Zinkdiaycrylat (ZDA) im Labormaßstab.

Hierbei wurde eine Haftschicht auf der Basis eines EPDM-Kautschuks und mit jeweils unterschiedlichen ZDA-Mengen, auf einen textilen Festigkeitsträger aus PVAL aufgebracht. Der textile Festigkeitsträger ist hierbei einmal mit einem RF-System Dip ausgestattet und enthält einmal keinen RF-System Dip.

Der sogenannte T-Test gemäß ASTM D2229 ist hierbei ein Haftungstest zwischen textiler Festigkeitsträgereinlage und Kautschukmischung. Beim T-Test wird die statische Haftung ermittelt. Hierbei werden die zu prüfenden Fäden in eine Gummimatrix eingelegt, welche anschließend unter Druck- und Temperatureinfluss vulkanisiert wird. Die in einem Winkel von 90° zum Herausziehen des Fadens aus dem Gummi benötigte Kraft wird gemessen und üblicherweise in Newton angeben, wobei die Breite des Vulkanisationsblocks je nach Fadenstärke 5 bzw. 10 mm beträgt.

Die aufgeführten Werte sind auf eine Haftschicht ohne ZDA aufgebracht auf einen PVAL-Festigkeitsträger mit RF-Dip normiert. Werte größer 100% stellen somit eine verbesserte Haftung dar.

Tabelle lb zeigt die Trennkraft ermittelt anhand der Weiterreißfestigkeit [N/mm] zwischen einer Festigkeitsträgerschicht aus PVAL und der Haftschicht an einem Schlauch mit einer Außenschicht und einer Innenschicht jeweils aus einer Kautschukmischung auf der Basis von EPDM nach einer Wärmealterung bei 120°C. Die Werte in einer Zeile sind hierbei auf die frische Trennkraft normiert.

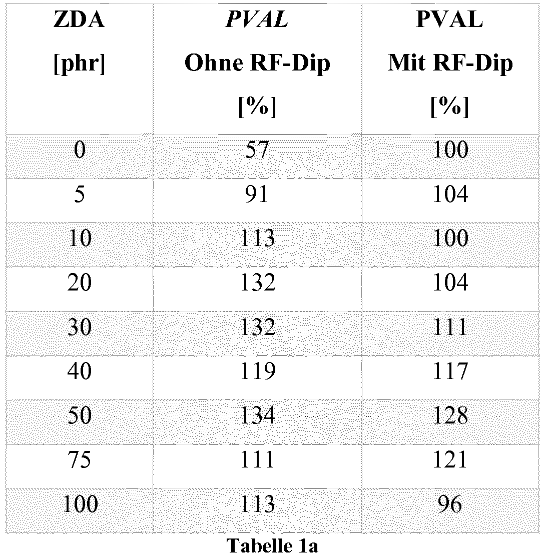

**Tabelle 1b**

| **ZDA [phr]** | **PVAL RF-Dip** | **Trennkraft frisch** | **Trennkraft Nach 166 h** | **Trennkraft Nach 500 h** | **Trennkraft Nach 1.000 h** |
|---|---|---|---|---|---|
| | | **[%]** | **[%]** | **[%]** | **[%]** |
| 0 | Ja | 100 | 125 | 138 | 98 |
| 50 | Ja | 100 | 129 | 139 | 126 |
| 50 | nein | 100 | 129 | 142 | 204 |

## Patentansprüche

1. Mehrschichtiger flexibler Schlauch, **dadurch gekennzeichnet, dass** er wenigstens folgenden Schichtenaufbau aufweist:
- eine einlagige oder mehrlagige Außenschicht auf Basis wenigstens eines EPM- oder EPDM-Kautschuks und
- wenigstens eine einlagige oder mehrlagige textile Festigkeitsträgerschicht bestehend aus PVAL oder einer Hybridvariante aus PVAL und Rayon oder einer Hybridvariante aus PVAL und Aramid oder einer Hybridvariante aus PVAL und Polyamid und
- wenigstens eine einlagige oder mehrlagige Haftschicht, wobei die Haftschicht als Haftmittel wenigstens ein Zink(II)salz der Acrylsäure und / oder wenigstens ein Zink(II)salz der Methacrylsäure und / oder wenigstens ein Zink(II)salz der Monomethacrylsäure enthält und
- eine einlagige oder mehrlagige Innenschicht auf Basis wenigstens eines EPM- oder EPDM-Kautschuks.

2. Mehrschichtiger flexibler Schlauch nach Anspruch 1, **dadurch gekennzeichnet, dass** er ein Bremsschlauch ist.

## Claims

1. Multilayer flexible hose, **characterized in that** it has at least the following layer structure:
- a single-ply or multi-ply outer layer based on at least one EPM rubber or EPDM rubber and
- at least one single-ply or multi-ply textile strength member layer consisting of PVAL or a hybrid variant of PVAL and rayon or a hybrid variant of PVAL and aramid or a hybrid variant of PVAL and polyamide and
- at least one single-ply or multi-ply adhesive layer, wherein the adhesive layer contains as the adhesive at least one zinc(II) salt of acrylic acid and/or at least one zinc(II) salt of methacrylic acid and/or at least one zinc(II) salt of monomethacrylic acid and
- a single-ply or multi-ply inner layer based on at least one EPM rubber or EPDM rubber.

2. Multilayer flexible hose according to Claim 1, **characterized in that** it is a brake hose.

## Revendications

1. Tuyau flexible multicouche, **caractérisé en ce qu'**il présente au moins la structure en couches suivante :
- une couche extérieure monocouche ou multicouche à base d'au moins un caoutchouc de type EPM ou de type EPDM et
- au moins une couche de support de renforcement textile monocouche ou multicouche constituée d'un PVAL ou d'une variante hybride de PVAL et de rayonne ou d'une variante hybride de PVAL et d'aramide ou d'une variante hybride de PVAL et de polyamide et
- au moins une couche adhésive monocouche ou multicouche, la couche adhésive contenant en tant qu'adhésif au moins un sel de zinc(II) de l'acide acrylique et/ou au moins un sel de zinc(II) de l'acide méthacrylique et/ou au moins un sel de zinc(II) de l'acide monométhacrylique et
- une couche interne monocouche ou multicouche à base d'au moins un caoutchouc de type EPM ou de type EPDM.

2. Tuyau flexible multicouche selon la revendication 1, **caractérisé en ce qu'**il est un flexible de frein.
